# FASCICULE DE BREVET EUROPEEN

(11) **EP 3 556 082 B1**
(45) Date de publication et mention de la délivrance du brevet: **01.11.2023**
(21) Numéro de dépôt: 17826264.8
(22) Date de dépôt: 11.12.2017
(51) Int. Cl.: H04L 67/306, H04L 12/28

(54) **TECHNIQUE DE CONFIGURATION D'UN SYSTÈME COMPRENANT AU MOINS UN DISPOSITIF**
TECHNIK ZUR KONFIGURATION EINES SYSTEMS MIT MINDESTENS EINER VORRICHTUNG
TECHNIQUE FOR CONFIGURING A SYSTEM COMPRISING AT LEAST ONE DEVICE

(30) Priorité: 19.12.2016 FR 1662750
(43) Date de publication de la demande: 23.10.2019
(73) Titulaire: Orange, 92130 Issy-les-Moulineaux (FR)
(72) Inventeur: BOLLE, Sébastien, 92326 Châtillon Cedex (FR); ROUAULT, Vincent, 92326 Châtillon Cedex (FR); ROUBAUD, Xavier, 92326 Châtillon Cedex (FR)
(86) Numéro de dépôt international: PCT/FR2017/053490
(87) Numéro de publication internationale: WO 2018/115633

(56) Documents cités:
- EP-A1- 2 145 499
- US-A1- 2013 091 279
- US-A1- 2015 154 850

## Description

L'invention se rapporte au domaine général des télécommunications.

L'invention concerne plus particulièrement une technique de configuration d'un système comprenant au moins un dispositif. Plus précisément, cette technique est mise en oeuvre lors d'un accès d'un utilisateur à ce système, dit système visité.

On constate une utilisation de plus en plus importante de systèmes, par exemple domotiques, dans lesquels un utilisateur peut configurer des services qui lui sont rendus, les dispositifs qui offrent ces services ainsi que des règles d'usage dans ce système. A titre d'exemple, le réseau domotique d'une habitation comprend des capteurs de mesure et des dispositifs domotiques. Des règles de gestion pour la commande des dispositifs domotiques peuvent être définies, en prenant en compte des données fournies par les capteurs ou les dispositifs eux-mêmes. Ces règles de gestion peuvent concerner la sécurité, l'éclairage, le chauffage, le contrôle parental,... Pour effectuer cette configuration, l'utilisateur doit donc définir ces différentes règles de gestion, et peut les faire évoluer dans le temps afin de mieux les adapter à ses besoins. Toujours à titre d'exemple, un véhicule personnel mémorise des réglages pour un utilisateur : siège, rétroviseur, ceinture, ordinateur de bord. Ainsi, l'utilisateur est habitué à retrouver dans son propre système, appelé système de référence, une configuration nominale de ses services et des dispositifs contribuant à la fourniture de ses services. Lorsque cet utilisateur loue temporairement une habitation, par exemple pour les vacances, il doit configurer le système domotique visité pour retrouver son environnement habituel. Cette configuration est longue et fastidieuse. Il en est de même lorsque cet utilisateur loue temporairement un véhicule.

La publication brevet US 2013/091279A1 décrit une configuration d'un réseau visité pour fournir un accès à des ressources d'un réseau domestique à un dispositif d'un visiteur.

La publication brevet EP 2145499A1 décrit un procédé de fourniture de services personnalisés à un terminal par un réseau visité.

Un des buts de l'invention est de remédier à des insuffisances/inconvénients de l'état de la technique et/ou d'y apporter des améliorations.

Selon un premier aspect, l'invention a pour objet un procédé de configuration d'un système comprenant au moins un dispositif. Ce procédé comprend :
- une autorisation pour un utilisateur d'accéder audit système, dit système visité ;
- une obtention pour ledit utilisateur de données d'information représentatives d'une configuration nominale dans un système de référence, ladite configuration nominale comprenant une information relative à un service configuré et au moins une règle de configuration d'un dispositif contribuant à la fourniture dudit service ;
- une configuration du service dans le système visité et d'au moins un dispositif du système visité en fonction de la configuration nominale obtenue.

Grâce au procédé de configuration, l'utilisateur peut ainsi retrouver dans un système visité une configuration qu'il avait réalisée pour un service dans son système de référence. Cette configuration comprend également la configuration d'un dispositif contribuant à la mise en oeuvre du service ainsi que de règles d'usage associées. Cette configuration dans le système de référence, dite configuration nominale, correspond aussi bien à une configuration locale (par exemple dans l'habitation de l'utilisateur) qu'à une configuration mixte comprenant également une configuration du service dans un serveur à distance.

Par exemple, quand un utilisateur prend la commande d'un nouveau véhicule, son téléphone se met automatiquement dans un mode « mains libres » avec ses numéros favoris. Toujours à titre d'exemple, lorsque l'utilisateur loue une habitation pour les vacances, les règles utilisées à son domicile s'auto-adaptent pour prendre en compte la configuration du système de référence : le badge, qui sert à sécuriser l'accès à son domicile, fonctionne directement avec ce logement. Il n'est donc pas nécessaire de comprendre et de faire manuellement toute la configuration de la solution domotique locale.

La technique de configuration s'appuie sur un profil numérique associé à un utilisateur, dit profil numérique personnel, comprenant la configuration nominale, c'est-à-dire les règles de configuration et les profils d'usage des services, de sorte que le système puisse être configuré en fonction de l'utilisateur. La configuration nominale correspond ainsi aux données d'usage et de préférence d'un utilisateur et les règles, paramètres, propriétés de ses dispositifs, services qui sont utiles à la configuration ou reconfiguration du système visité.

Dans un mode de réalisation particulier, la configuration s'appuie sur une description des services et des dispositifs selon un format interprétable de modèles (« template » en anglais) de configuration. De plus, les systèmes de référence et visité disposent d'interfaces de programmation applicatives API (pour « Application Program Interface »). Ces interfaces de programmation permettent ainsi d'appliquer la configuration. L'utilisation de ce format et de ces interfaces de programmation permet de mettre en oeuvre le procédé de configuration, même si les fournisseurs du service et/ou des dispositifs ne sont pas identiques entre les systèmes de référence et visité.

La technique de configuration permet ainsi de rendre nomade un profil numérique personnel associé à un utilisateur, c'est à dire les règles de configuration et profils d'usage des services pour cet utilisateur, de sorte qu'un système visité puisse être configuré en fonction du profil numérique personnel de cet utilisateur. Dans un mode de réalisation particulier, ce profil numérique personnel est mémorisé dans un dispositif distant accessible par l'intermédiaire d'un réseau de communication étendu. Dans un autre mode de réalisation, ce profil numérique personnel est mémorisé dans un objet personnel de l'utilisateur, par exemple une clé sécurisée ou un terminal mobile. Ce profil numérique personnel est configuré pour être interprétable et applicable à différents fournisseurs de service. Par exemple, les règles d'usage pour un service musical qu'un utilisateur a configuré à son domicile sont également applicables à un autre service musical disponible dans un système visité. Toujours à titre d'exemple, la configuration d'un véhicule de location (siège, rétroviseur, température, station de radio, aide à la conduite, ...) s'adapte à l'utilisateur en fonction de la configuration dans son propre véhicule, même si les véhicules et les équipements intérieurs sont de marques différentes.

La technique de configuration permet de simplifier l'expérience des utilisateurs de systèmes électroniques et services connectés environnants en permettant une configuration automatique et dynamique tenant compte du contexte local du système visité et en fonction d'une configuration nominale.

Les différents modes ou caractéristiques de réalisation mentionnés ci-après peuvent être ajoutés indépendamment ou en combinaison les uns avec les autres, au procédé de configuration tel que défini précédemment.

Dans un mode de réalisation particulier, le procédé de configuration comprend en outre une obtention d'un inventaire du système visité, ledit inventaire comprenant pour un service offert dans le système visité un modèle de configuration du service et pour un dispositif contribuant à la fourniture d'un service un modèle de configuration du dispositif.

Cet inventaire est obtenu lors d'une découverte du système visité et recense l'ensemble des services, dispositifs et règles disponibles dans le système visité.

Cet inventaire permet de mettre en oeuvre le procédé de configuration pour un service qui est offert dans le système visité. Ainsi, la configuration est effectuée pour un service configuré dans le système de référence et qui peut être offert par un service au moins fonctionnellement équivalent dans le système visité.

Selon une caractéristique particulière, le procédé de configuration comprend en outre une obtention d'un inventaire du système visité pour un service donné, ledit inventaire comprenant pour ledit service un modèle de configuration du service et pour un dispositif contribuant à la fourniture du service un modèle de configuration du dispositif..

Une recherche explicite pour un service donné peut ainsi être déclenchée lorsqu'il n'a pas été découvert lors de l'établissement de l'inventaire.

Ceci permet de compléter l'inventaire avec des modèles de configuration dans le système visité pour un service qui est configuré dans le système de référence.

Dans un mode de réalisation particulier, le procédé de configuration comprend une obtention d'une configuration à appliquer pour un service offert dans le système visité et absent de la configuration nominale obtenue.

Ceci permet de configurer un service qui est offert dans le système visité alors qu'il ne l'est pas dans le système de référence. Dans une mise en oeuvre particulière, la configuration est obtenue au moyen d'une interface homme-machine auprès de l'utilisateur. Dans une autre mise en oeuvre particulière, la configuration est obtenue auprès d'un serveur géré par l'opérateur administrant le système de référence.

Dans un mode de réalisation particulier du procédé de configuration, la configuration du service dans le système visité et dudit au moins un dispositif du système visité est déterminée en outre en fonction d'une règle de sécurité définie dans le système visité.

Ceci permet de garantir la prise en compte des règles de sécurité applicables dans le système visité quelle que soit la configuration déterminée en fonction de la configuration nominale obtenue. La configuration déterminée ne peut enfreindre les règles de sécurité du système visité.

Selon un deuxième aspect, l'invention concerne un dispositif pour configurer un système comprenant au moins un dispositif, ledit dispositif de configuration comprenant :
- un module d'autorisation, agencé pour obtenir une autorisation pour un utilisateur d'accéder à un système, dit système visité ;
- un module d'obtention d'une configuration nominale, agencé pour obtenir pour un utilisateur autorisé des données d'information représentatives de la configuration nominale dans un système de référence, ladite configuration nominale comprenant une information relative à un service configuré et au moins une règle de configuration d'un dispositif contribuant à la fourniture dudit service ;
- un module de configuration, agencé pour configurer un service dans le système visité et au moins un dispositif du système visité en fonction de la configuration nominale obtenue.

Les avantages énoncés pour le procédé de configuration selon le premier aspect sont transposables directement au dispositif de configuration.

Selon un troisième aspect, l'invention concerne un programme pour un dispositif de configuration, comprenant des instructions de code de programme destinées à commander l'exécution des actions du procédé de configuration précédemment décrit mises en oeuvre par le dispositif de configuration, lorsque ce programme est exécuté par ce dispositif et un support d'enregistrement lisible par un dispositif de configuration sur lequel est enregistré un programme pour un dispositif de configuration.

Les avantages énoncés pour le procédé de configuration selon le premier aspect sont transposables directement au programme pour un dispositif de configuration et au support d'enregistrement.

La technique de configuration d'un système sera mieux comprise à l'aide de la description suivante de modes de réalisation particuliers, en référence aux dessins annexés sur lesquels :
- la figure 1 représente un environnement de systèmes dans un mode de réalisation particulier ;
- la figure 2 illustre des étapes d'un procédé de configuration selon un mode particulier de réalisation ;
- la figure 3 représente une description de service et de dispositifs selon un format interprétable de modèles dans un mode particulier de réalisation ;
- la figure 4 représente un dispositif de configuration selon un mode particulier de réalisation.

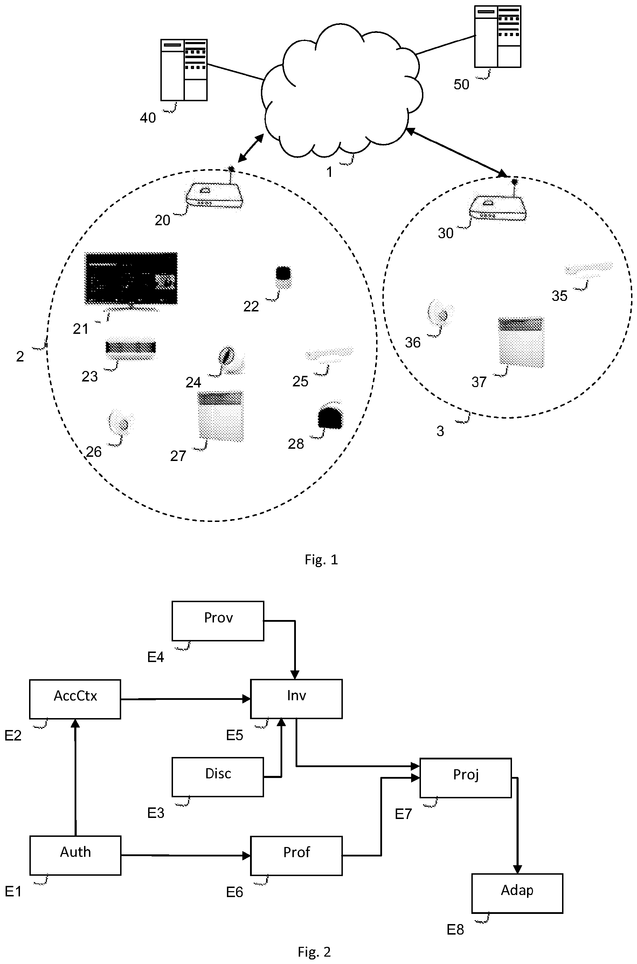

La **figure 1** représente un environnement de systèmes dans un mode de réalisation particulier. Un premier système 2 correspond à un système dit de référence. Ce système 2 de référence comprend des dispositifs, aptes à mettre en oeuvre un ou des services pour un utilisateur U. Ce système 2 de référence comprend notamment :
- un dispositif d'accès 20 à un réseau 1 de communication étendu, par exemple le réseau Internet, par l'intermédiaire d'un réseau d'accès (non représenté) ;
- une télévision 21 ;
- une caméra de vidéosurveillance 22 ;
- un détecteur de fumée 23 ;
- un détecteur de mouvement 24 ;
- un capteur 25 détecteur d'ouverture de porte ;
- un thermostat 26 ;
- un radiateur 27 ;
- un boitier de commande de volet 28.

Il est ici souligné qu'il s'agit uniquement d'un exemple illustratif.

Le réseau d'accès peut être un réseau cellulaire mobile, par exemple de type 2G, 3G, 4G, 5G, ou un réseau d'accès xDSL ou bien encore un réseau d'accès optique. Aucune limitation n'est attachée au type de réseau d'accès.

Sur la figure 1 est également représenté un deuxième système 3, appelé par la suite système visité. Ce système visité 3 comprend notamment :
- un dispositif d'accès 30 au réseau 1 de communication étendu par l'intermédiaire d'un réseau d'accès (non représenté) ;
- un capteur 35 détecteur d'ouverture de porte ;
- un thermostat 36 ;
- un radiateur 37.

On souligne ici que ces dispositifs sont représentés de manière identique entre les deux systèmes. Cette représentation vise la fonction du dispositif et non sa forme matérielle ou son fabricant.

Un serveur 40 de gestion de profil numérique personnel est notamment agencé pour obtenir, par l'intermédiaire du réseau de communication 1, en provenance du système de référence 2 pour un utilisateur des données d'information représentatives d'une configuration nominale dans le système 2. Ces données d'information sont mémorisées dans un format interprétable, tel que décrit ultérieurement, formant alors un profil numérique personnel. Le serveur 40 est agencé pour mémoriser le profil numérique personnel de l'utilisateur U associé au système de référence 2.

Un profil numérique personnel comprend des données d'information telles que des règles de configuration pour les dispositifs de son système 2 de référence, pour les services mis en oeuvre dans son système 2 de référence et des profils d'usage de services, dans un format interprétable.

Un serveur 50 de configuration est notamment agencé pour obtenir du serveur 40 des données d'information représentatives d'une configuration nominale dans le système de référence 2 pour un utilisateur, pour déterminer une configuration à appliquer dans un système visité par cet utilisateur et pour configurer le système visité 3 en fonction de la configuration déterminée.

Les systèmes de référence 2 et visité 3 disposent d'interfaces de programmation applicatives API. Ces interfaces de programmation permettent ainsi d'appliquer la configuration, notamment dans le système visité 3, une fois celle-ci déterminée. L'utilisation de ces interfaces de programmation contribue à la mise en oeuvre du procédé de configuration, même si les fournisseurs du service et/ou des dispositifs ne sont pas identiques entre les systèmes de référence et visité.

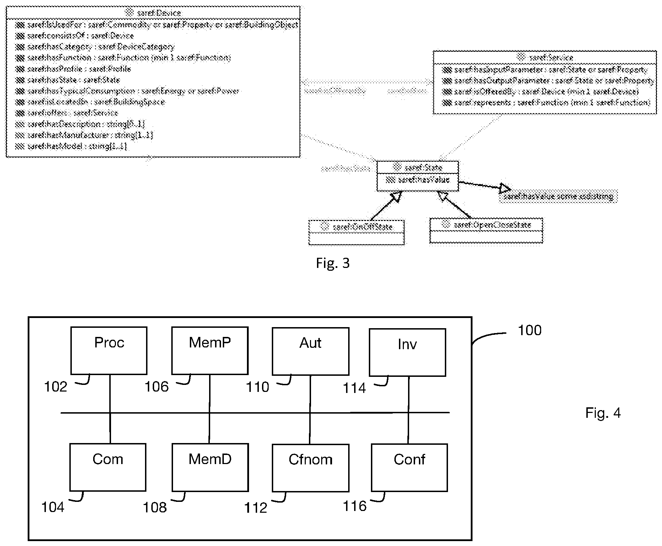

La **figure 3** représente un exemple de description sémantique d'une structure de données comprenant un dispositif et un service.

Les graphes sont des outils permettant de représenter aisément et de façon synthétique des données d'information, et notamment les concepts contenus dans ces données ainsi que les relations liant ces concepts entre eux. L'ensemble des concepts et des relations liant ces concepts entre eux est aussi connu sous le nom d'ontologie. Plus spécifiquement, afin de garantir la cohérence et la bonne interprétation des modèles, le langage RDF (pour « Resource Description Framework ») s'appuie sur la définition et l'utilisation d'ontologies, qui sont elles-mêmes des modèles RDF définissant des types de données ou d'objets dont les concepts contenus dans chaque information relèvent. Une ontologie, dans un contexte informatique, désigne une conceptualisation d'un domaine de connaissances. Par conceptualisation, on entend ici la définition des termes qui sont nécessaires pour exprimer le sens d'une information relevant de ce domaine et les propriétés de ces termes. Les termes incluent les types d'objet (ou classes) et les relations entre ces types d'objet. Une propriété d'une relation est par exemple sa transitivité. Autrement dit, une ontologie désigne à la fois un choix quant à la manière de décrire un domaine, et la description formelle de ce domaine. Les ontologies sont couramment utilisées dans des domaines tels que l'intelligence artificielle, le web sémantique, le génie logiciel, l'interopérabilité entre systèmes hétérogènes, etc.

Une telle approche permet de définir un service sans être lié au fournisseur d'un dispositif connecté. L'accès à un service s'effectue alors au moyen d'une description porteuse de sens.

L'exemple représenté à la figure 3 est issu de l'ontologie SAREF (pour « Smart Appliance REFerence ») telle que décrite à l'adresse http://ontology.tno.nl/saref/).

Les dispositifs sont des objets agencés pour fournir ou contribuer à la fourniture d'une ou de plusieurs fonctions dans une habitation, des lieux publics ou des bureaux. L'ontologie SAREF offre une liste de fonctions basiques qui peuvent être éventuellement combinées pour obtenir une fonction plus complexe. Un dispositif offre un service, qui est une représentation d'une fonction dans un réseau, qui rend la fonction découvrable, enregistrable et contrôlable à distance par d'autres dispositifs dans le réseau. Un service peut représenter une ou plusieurs fonctions. Un service est offert par un dispositif qui souhaite que ses fonctions soient découvrables, enregistrables et contrôlables à distance par d'autres dispositifs dans le réseau.

Une telle structure de données est par exemple modélisée par un graphe.

Un service doit spécifier quel dispositif offre le service, la fonction à représenter et les paramètres d'entrée et de sortie pour mettre en oeuvre le service. A titre illustratif, le service *saref:Service* est représenté par un ensemble de données d'information, correspondant à des propriétés d'objet :
*saref:hasInputParameter* un lien identifiant le paramètre d'entrée d'un service ;
*saref:hasOutputparameter* un lien identifiant le paramètre de sortie d'un service ;
*saref:isOfferedBy* un lien entre un service et un dispositif qui offre le service ;
*saref:represents* un lien entre un service et une fonction.

Le dispositif *saref:Device* est représenté par un ensemble de données d'information :
- des propriétés d'objet :
   *saref:IsUsedFor* un lien précisant le but d'utilisation du dispositif ;
   *saref:consistsOf* un lien indiquant une entité composite qui comprend plusieurs autres entités :
      *saref:hasCategory* un lien entre une entité (telle qu'un dispositif ou une fonction) et une catégorie ;
      *saref:hasFunction* un lien identifiant le type de fonction d'un dispositif ;
      *saref:hasProfile* un lien associant un profil à une entité, par exemple un dispositif ;
      *saref:hasState* un lien identifiant le type d'état d'un dispositif ;
      *saref:hasTypical Consumption* un lien identifiant la consommation typique d'un dispositif ;
      *saref:isLocatedIn* un lien entre un dispositif et un espace construit dans lequel il est localisé ;
      *saref:offers* un lien entre un dispositif et un service;
- des propriétés de types de données :
   *saref:hasDescription* un lien fournissant une description d'une entité (par exemple un dispositif) ;
   *saref:hasManufacturer* un lien identifiant le fabricant d'une entité (par exemple un dispositif) ;
   *saref:hasModel* un lien identifiant le modèle d'une entité (par exemple un dispositif).

Par exemple, des données d'information selon lesquelles « le service est offert par le dispositif » peuvent être modélisées par un graphe comprenant deux noeuds associés respectivement à la classe « Dispositif » (*saref:Device* sur la figure 3) et à la classe « Service » (*saref:Service*), et un arc reliant le noeud « Service » au noeud « Dispositif » ayant pour signification « est offert par » (« *isOfferedBy* »). De même, des données d'information selon lesquelles « le dispositif offre le service » peuvent être modélisées par un graphe comprenant les deux noeuds associés respectivement à la classe « Dispositif » et à la classe « Service », et un arc reliant le noeud « Device » au noeud « Service » ayant pour signification « offre » (« *offers* »)*.*

Des données d'information selon lesquelles « le service a un état » peuvent être modélisées par un graphe comprenant les deux noeuds « Service » et « Etat », et un arc reliant le noeud « Service » au noeud « Etat » ayant pour signification « a un état » (« *hasState* »). Il en est de même pour « le dispositif a un état » modélisé par un arc reliant le noeud « Dispositif » au noeud « Etat ».

Le profil numérique personnel comprend ainsi pour chaque service configuré, le modèle de configuration de service applicable, le graphe reliant ce service aux dispositifs offrant le service, le modèle de configuration de dispositif applicable, les données d'usage et de préférence de ces services et dispositifs.

La fourniture du service de configuration s'appuie sur cette description sémantique des services, des dispositifs et des règles d'usage. Il peut ainsi être fourni dans le réseau d'un opérateur lorsque ces descriptions sémantiques sont fournies pour les deux systèmes, de référence et visité. Il est également applicable lorsque deux opérateurs fournissant ce service de configuration utilisent une description sémantique commune des services, des dispositifs et des règles d'usage, ou du moins une description sémantique interprétable de ceux-ci.

L'ontologie SAREF est ici donnée à titre illustratif. D'autres ontologies peuvent également être utilisées. Dans le domaine général des capteurs, on peut citer l'ontologie SSN (pour « Semantic Sensor Network ») définie par le groupe SSN-XG du W3C (pour « World Wide Web Consortium ») et décrite à l'adresse https://www.w3.org/2005/Incubator/ssn/ssnx/ssn. Dans le domaine de la domotique, on peut citer l'ontologie DogOnt (pour « Domotic Gateway Ontology ») décrite à l'adresse http://elite.polito.it/ontologies/dogont/dogont.html. Dans le domaine des objets connectés, on peut citer l'ontologie IoT-Thing décrite à l'adresse https://www.irit.fr/recherches/MELODI/ontologies/IoT-O.html#IoT_Thing.

La **figure 2** illustre des étapes du procédé de configuration d'un système comprenant au moins un dispositif. Ce système 3 correspond à un système visité. Plus précisément, un utilisateur U se déplace et accède au système visité. Cet accès s'effectue par exemple au moyen d'un terminal mobile. De manière générale, un terminal connecté au réseau Internet permet d'effectuer cet accès. L'utilisateur a souscrit à un service de configuration de système lors d'une mobilité auprès d'un opérateur d'un tel service.

Dans une étape préalable, non représentée sur la figure 2, l'utilisateur a accédé à son système 2 de référence. Lors de ces différents accès, l'utilisateur a configuré au moyen de son terminal mobile les services offerts dans son système de référence, les dispositifs contribuant à la fourniture de ces services et les règles d'usage dans le système 2 de référence. Cette configuration, appelée configuration nominale, est représentée sous un format interprétable et comprend ainsi au moins une information relative à un service configuré dans le système de référence et au moins une règle de configuration d'un dispositif contribuant à la fourniture de ce service. Il est ici souligné qu'un service peut être également fourni dans un dispositif localisé dans un réseau de communication (dans le « cloud »). Dans ce cas, le profil numérique personnel comprend également les informations relatives à ce type de service. Dans le mode de réalisation décrit, cette configuration nominale est mémorisée sous la forme du profil numérique personnel de l'utilisateur U dans le serveur 40 gestion de profil numérique personnel.

Dans une étape E1, l'utilisateur est authentifié par un opérateur du service de configuration par l'intermédiaire de son terminal mobile. Puis dans une étape E2, l'utilisateur est autorisé à accéder au système visité 3 par l'opérateur du service de configuration. On souligne ici que les deux systèmes de référence et visité ne sont pas obligatoirement administrés par un même opérateur et que dans ce cas, les deux opérateurs peuvent avoir conclus entre eux un accord pour accueillir des utilisateurs de l'autre opérateur. Dans ce mode de réalisation, des échanges (non représentés sur la figure 2) ont lieu entre les deux opérateurs afin de mettre en oeuvre ces étapes E1 et E2.

Dans une étape E3, une phase de découverte du système visité 3 est effectuée. Au cours de cette phase, un modèle de configuration de service est obtenu pour un service offert dans le système visité et un modèle de configuration de dispositif est également obtenu pour un dispositif contribuant à la fourniture d'un service. Ainsi, les services, les dispositifs et les règles disponibles localement dans le système visité 3, disponibles pour être configurés, sont recensés pour le système visité 3. Ces données d'information découvertes forment un inventaire. Il est ici souligné qu'un service peut être également fourni dans un dispositif distant localisé dans un réseau de communication accessible par le réseau Internet (dans le nuage ou « cloud »). L'inventaire recense également les informations de configuration pour ce type de service.

Cette étape E3 peut être déclenchée par l'utilisateur au moyen de l'interface homme-machine de son terminal pour découvrir le système visité de manière globale.

Il est ici souligné que certains services, dispositifs ou règles disponibles localement peuvent être exclus de cette phase de découverte, lorsqu'un accès à ceux-ci est limité par une règle de restriction d'accueil, c'est-à-dire qu'ils ne sont pas disponibles pour un utilisateur en mobilité.

Le résultat obtenu suite à cette étape E3 peut également être affiché sur l'interface homme-machine du terminal, afin que l'utilisateur puisse visualiser le système visité 3.

Dans le mode de réalisation décrit, cette étape E3 est exécutée suite à l'autorisation d'accès de l'utilisateur. Dans un autre mode de réalisation, cette étape E3 est exécutée de manière périodique dans le système visité 3. Dans d'autres modes de réalisation, cette étape E3 est exécutée lors d'une modification dans le système visité 3.

Cette étape E3 est par exemple exécutée par la passerelle d'accès 30.

Dans un mode de réalisation particulier, dans une étape E4, l'utilisateur complète cet inventaire en configurant certains services et/ou dispositifs qui n'ont pas été recensés ou bien recensés partiellement. Cette configuration peut être effectuée au moyen d'une interface homme-machine.

Dans une étape E5, le serveur 50 de configuration obtient l'inventaire du système visité 3, obtenu à l'étape E3 et éventuellement complété à l'étape E4. Dans un mode de réalisation particulier, l'inventaire est reçu en provenance de la passerelle d'accès 30. Dans un autre mode de réalisation particulier, l'inventaire a été mémorisé dans une zone mémoire située dans le réseau de l'opérateur du système visité 3 suite à l'exécution de l'étape E3 (complété le cas échéant à l'étape E4) et est demandé par le serveur 50 de configuration lors de l'exécution de l'étape E5.

Dans une étape E6, le serveur 50 de configuration obtient auprès du serveur 40 de gestion le profil numérique personnel de l'utilisateur, c'est-à-dire des données d'information représentatives d'une configuration nominale pour cet utilisateur dans son système de référence 2. On rappelle que cette configuration nominale comprend une information relative à un service configuré et au moins une règle de configuration d'un dispositif contribuant à la fourniture dudit service.

Dans une étape E7, le serveur 50 de configuration effectue une projection du contenu de l'inventaire sur le profil numérique de l'utilisateur. Pour effectuer cette projection, le serveur 50 de configuration effectue notamment une interprétation sémantique du contenu de l'inventaire et sélectionne des modèles de configuration mémorisés dans le profil numérique personnel pour les mettre en correspondance avec ceux de l'inventaire. Par exemple, si un service décrit dans le profil numérique personnel est offert dans le système visité 3, c'est-à-dire est présent dans le contenu de l'inventaire, une mise en correspondance des modèles de configuration est effectuée, afin de permettre de configurer ce service. Si un service décrit dans le profil numérique personnel n'est pas offert dans le système visité, il n'est pas conservé. Ainsi, à l'issue de cette étape E7, le ou les services dont une configuration est définie dans le profil numérique personnel et offerts dans le système visité sont conservés.

Dans une étape E8, le serveur de configuration 50 détermine une configuration pour le ou les services déterminés à l'étape E7 en fonction de la configuration nominale, c'est-à-dire le profil numérique personnel. Plus précisément, le serveur de configuration 50 détermine à partir de la mise en correspondance la configuration à appliquer dans le système visité 3. Puis, le serveur de configuration 50 configure les services dans le système visité 3 au moyen de l'interface de programmation. Cette configuration comprend également la configuration du ou des dispositifs contribuant à la fourniture du service et des règles d'usage dans le système visité. Cette configuration instancie les modèles de configuration en fonction d'informations de configuration du profil numérique personnel. Le serveur de configuration 50 les transfère vers le système visité 3 et commande leur installation. Ceci permet à l'utilisateur de retrouver un environnement d'exécution de services dans le système visité correspondant à celui qu'il a dans son système de référence, au moins pour les services et dispositifs disponibles. Un service de nomadisme est ainsi offert à l'utilisateur. Ce nomadisme peut s'effectuer pour une variété d'environnements, tels qu'un environnement de réseau domotique, un environnement d'aide à la conduite dans un véhicule, ...

A titre illustratif, on considère qu'un service S de réglage de la température est offert dans le système de référence 2. Ce service S consiste à déclencher le radiateur 27 sur détection d'une ouverture de porte par le dispositif 25 lorsque la température relevée par le thermostat 26 est inférieure à une valeur seuil. Il est souligné que d'autres services sont également offerts dans le système de référence 2 mais ne sont pas décrits. Ce service est décrit comme étant offert par la passerelle d'accès 20 et est en lien avec les dispositifs détecteur d'ouverture de porte 25 (fonction « détection »), thermostat 26 (fonction « température ») et radiateur 27 (fonction « on/off »).

L'utilisateur demande un accès au système visité 3 et l'obtient (étape E2). Suite à l'exécution de l'étape E3, l'inventaire comprend les services, les dispositifs et les règles disponibles dans le système visité 3. Les dispositifs passerelle d'accès 30, détecteur d'ouverture de porte 35, thermostat 36 et radiateur 37 sont identifiés comme étant disponibles et leurs modèles de configuration sont obtenus. Le serveur de configuration 50 effectue notamment une interprétation sémantique du contenu de l'inventaire et sélectionne des modèles de configuration mémorisés dans le profil numérique personnel pour les mettre en correspondance avec ceux de l'inventaire (étape E7). Puis le serveur de configuration 50 détermine la configuration à mettre en place dans le système visité 3 pour offrir le service S.

Toujours à titre illustratif, il est possible à l'utilisateur d'accéder à une liste de musiques, définie pour un premier service de restitution de musique, lors de l'exécution d'un deuxième service de restitution de musique dans un système visité.

Dans un mode de réalisation particulier, la configuration du service dans le système visité et le cas échéant de dispositif du système visité est déterminée également en fonction d'une règle de sécurité définie dans le système visité. En effet, cette ou ces règles de sécurité définie(s) dans le système visité sont prioritaires par rapport à la configuration du service pour l'utilisateur.

A titre d'exemple illustratif, le propriétaire d'une habitation dans laquelle le système visité est déployé ne veut pas que la porte d'entrée puisse être ouverte automatiquement quand l'habitation est louée ou bien encore que le thermostat 36 puisse être réglé à une température plus élevée qu'une valeur seuil.

Toujours à titre d'exemple illustratif, une règle de sécurité correspond à la configuration d'un système d'alarme du système visité nécessitant des paramètres liés à la spécificité des lieux, tels qu'un nombre d'entrées du lieu visité, une temporisation des capteurs et des sirènes en fonction du nombre d'entrées, ...

Dans un mode de réalisation particulier, le serveur 50 de configuration obtient de l'utilisateur par l'intermédiaire d'une interface homme-machine une configuration à effectuer pour un service non décrit dans le profil numérique personnel, ce service étant offert dans le système visité et absent de la configuration nominale obtenue. Puis, le serveur 50 configure ensuite ce service dans le système visité. Cette configuration peut être également mémorisée dans le profil numérique personnel auprès du serveur 40, afin d'être utilisée dans un autre système visité, le cas échéant.

Dans un mode de réalisation particulier, le serveur 50 de configuration obtient auprès d'un serveur géré par l'opérateur administrant le système de référence une configuration à effectuer pour un service non décrit dans le profil numérique personnel, ce service étant offert dans le système visité et absent de la configuration nominale obtenue. Puis, le serveur 50 configure ensuite ce service dans le système visité. Ceci permet d'appliquer une configuration par défaut à un service non décrit dans le profil numérique personnel.

Dans les modes de réalisation décrits, le serveur 50 de configuration exécute notamment les étapes E7 et E8. Dans un autre mode de réalisation, ces deux étapes sont effectuées par la passerelle d'accès 30 au système visité, ou tout autre dispositif de ce système (par exemple dans un dispositif de gestion domotique). Dans un autre mode de réalisation, ces deux étapes sont effectuées par la passerelle d'accès 20 du système de référence (ou tout autre dispositif de ce système, tel qu'un dispositif de gestion domotique), qui commande ensuite la configuration du système visité 3, par exemple par l'intermédiaire d'un serveur distant situé dans le réseau d'un opérateur.

Dans le mode de réalisation décrit, le profil numérique personnel est mémorisé dans le serveur 40 de gestion de profil numérique personnel. Ceci permet de le rendre accessible à distance. Dans un autre mode de réalisation, le profil numérique personnel est mémorisé dans une zone mémoire de la passerelle d'accès 20 ou dans un dispositif de gestion domotique du système de référence 2. Dans un autre mode de réalisation, le profil numérique personnel est mémorisé dans un objet personnel de l'utilisateur, par exemple une clé électronique ou un terminal mobile. Ceci permet à l'utilisateur de rendre son profil numérique personnel accessible par la passerelle d'accès du système visité. Pour des raisons de sécurité, le profil numérique personnel peut être mémorisé dans une zone sécurisée.

Aucune limitation n'est attachée à ces différents modes de réalisation et l'homme du métier est à même d'en définir d'autres permettant à l'aide d'un profil numérique personnel, représentant des modèles de configuration pour un service et pour un dispositif obtenus pour un système de référence, de configurer un système visité en fonction de ce profil.

La **figure 4** illustre de manière schématique un dispositif de configuration 100 dans un mode de réalisation particulier. Le dispositif de configuration 100 comprend notamment :
- un processeur 102 pour exécuter des instructions de code de modules logiciels ;
- un module de communication 104, formant une interface de communication avec un d'autres dispositifs ou serveurs ;
- une zone mémoire 106, agencée pour mémoriser un programme qui comprend des instructions de code pour mettre en oeuvre les étapes du procédé de configuration ;
- une mémoire de stockage 108, agencée pour stocker des données utilisées lors de la mise en oeuvre du procédé de configuration ;
- un module d'autorisation 110, agencé pour obtenir une autorisation pour un utilisateur d'accéder à un système, dit système visité ;
- un module d'obtention 112 d'une configuration nominale, agencé pour obtenir pour un utilisateur autorisé des données d'information représentatives de la configuration nominale dans un système de référence, ladite configuration nominale comprenant une information relative à un service configuré et au moins une règle de configuration d'un dispositif contribuant à la fourniture dudit service ;
- un module de configuration 116, agencé pour configurer un service dans le système visité et au moins un dispositif du système visité en fonction de la configuration nominale obtenue.

Dans un mode de réalisation particulier, le dispositif de configuration 100 comprend en outre un module d'obtention 114 d'un inventaire, agencé pour obtenir un inventaire du système visité, ledit inventaire comprenant pour un service offert dans le système visité un modèle de configuration du service et pour un dispositif contribuant à la fourniture d'un service un modèle de configuration du dispositif.

Dans le mode de réalisation décrit précédemment, le dispositif de configuration 100 est intégré dans un serveur de configuration 50. Dans d'autres modes de réalisation, le dispositif de configuration est intégré dans une passerelle d'accès 20, 30, ou bien encore dans un dispositif de gestion de réseau local, véhicule, domotique, ...

La technique de configuration est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 110, 112, 114, 116 sont agencés pour mettre en oeuvre les étapes du procédé de configuration précédemment décrit, mises en oeuvre par le dispositif de configuration. Il s'agit de préférence de modules logiciels comprenant des instructions logicielles pour faire exécuter des étapes (ou des actions) du procédé de configuration précédemment décrit, mises en oeuvre par un dispositif de configuration. L'invention concerne donc aussi :
- un programme pour un dispositif de configuration, comprenant des instructions de code de programme destinées à commander l'exécution des étapes (ou des actions) du procédé de configuration précédemment décrit, lorsque ledit programme est exécuté par ce dispositif de configuration ;
- un support d'enregistrement lisible par un dispositif de configuration sur lequel est enregistré le programme pour un dispositif de configuration.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de configuration d'un système (3) comprenant au moins un dispositif (30, 35, 36, 37), ledit procédé comprenant :
- une autorisation pour un utilisateur d'accéder (E1) audit système, dit système visité ;
- une obtention (E6) pour ledit utilisateur de données d'information représentatives d'une configuration nominale dans un système de référence (2), ladite configuration nominale comprenant une information relative à un service configuré dans ledit système de référence et au moins une règle de configuration d'un dispositif contribuant à la fourniture dudit service dans ledit système de référence ;
- une configuration (E8) dans le système visité en fonction de la configuration nominale obtenue du service configuré dans ledit système de référence et d'au moins un dispositif du système visité contribuant à la fourniture du service dans le système visité.

2. Procédé de configuration selon la revendication 1, comprenant en outre une obtention (E5) d'un inventaire du système visité, ledit inventaire comprenant pour un service offert dans le système visité un modèle de configuration du service et pour un dispositif contribuant à la fourniture d'un service un modèle de configuration du dispositif.

3. Procédé de configuration selon la revendication 2, comprenant en outre une obtention (E4) d'un inventaire du système visité pour un service donné, ledit inventaire comprenant pour ledit service un modèle de configuration du service et pour un dispositif contribuant à la fourniture du service un modèle de configuration du dispositif.

4. Procédé de configuration selon la revendication 1, comprenant une obtention d'une configuration à appliquer pour un service offert dans le système visité et absent de la configuration nominale obtenue.

5. Procédé de configuration selon la revendication 1, dans lequel la configuration du service dans le système visité et dudit au moins un dispositif du système visité est déterminée en outre en fonction d'une règle de sécurité définie dans le système visité.

6. Dispositif (100, 50) pour configurer un système (3) comprenant au moins un dispositif (30, 35, 36, 37), ledit dispositif de configuration comprenant :
- un module d'autorisation (110), agencé pour obtenir une autorisation pour un utilisateur d'accéder à un système, dit système visité ;
- un module d'obtention (112) d'une configuration nominale, agencé pour obtenir pour un utilisateur autorisé des données d'information représentatives de la configuration nominale dans un système de référence, ladite configuration nominale comprenant une information relative à un service configuré dans ledit système de référence et au moins une règle de configuration d'un dispositif contribuant à la fourniture dudit service dans ledit système de référence ;
- un module de configuration (116), agencé pour configurer, dans le système visité en fonction de la configuration nominale obtenue, le service configuré dans ledit système de référence et au moins un dispositif du système visité contribuant à la fourniture du service dans le système visité.

7. Programme pour un dispositif de configuration, comprenant des instructions de code de programme destinées à commander l'exécution des actions du procédé de configuration selon l'une des revendications 1 à 5 mises en oeuvre par le dispositif, lorsque ledit programme est exécuté par ledit dispositif.

8. Support d'enregistrement lisible par un dispositif de configuration sur lequel est enregistré le programme selon la revendication 7.

## Patentansprüche

1. Verfahren zur Konfiguration eines Systems (3), das mindestens eine Vorrichtung (30, 35, 36, 37) enthält, wobei das Verfahren enthält:
- eine Berechtigung für einen Benutzer, auf das System, besuchtes System genannt, zuzugreifen (E1);
- eine Erlangung (E6) für den Benutzer von Informationsdaten, die für eine Nennkonfiguration in einem Bezugssystem (2) repräsentativ sind, wobei die Nennkonfiguration eine Information bezüglich eines in dem Bezugssystem konfigurierten Diensts und mindestens eine Konfigurationsregel einer Vorrichtung enthält, die zur Lieferung des Diensts im Bezugssystem beiträgt;
- eine Konfiguration (E8) im besuchten System abhängig von der erlangten Nennkonfiguration des im Bezugssystem konfigurierten Diensts und mindestens einer Vorrichtung des besuchten Systems, die zur Lieferung des Diensts im besuchten System beiträgt.

2. Konfigurationsverfahren nach Anspruch 1, das außerdem eine Erlangung (E5) eines Inventars des besuchten Systems enthält, wobei das Inventar für einen angebotenen Dienst im besuchten System ein Konfigurationsmodell des Diensts und für eine zur Lieferung eines Diensts beitragende Vorrichtung ein Konfigurationsmodell der Vorrichtung enthält.

3. Konfigurationsverfahren nach Anspruch 2, das außerdem eine Erlangung (E4) eines Inventars des besuchten Systems für einen gegebenen Dienst enthält, wobei das Inventar für den Dienst ein Konfigurationsmodell des Diensts und für eine zur Lieferung des Diensts beitragende Vorrichtung ein Konfigurationsmodell der Vorrichtung enthält.

4. Konfigurationsverfahren nach Anspruch 1, das eine Erlangung einer für einen im besuchten System angebotenen und nicht in der erlangten Nennkonfiguration enthaltenen Dienst anzuwendenden Konfiguration enthält.

5. Konfigurationsverfahren nach Anspruch 1, wobei die Konfiguration des Diensts im besuchten System und der mindestens einen Vorrichtung des besuchten Systems außerdem abhängig von einer im besuchten System definierten Sicherheitsregel bestimmt wird.

6. Vorrichtung (100, 50) zur Konfiguration eines Systems (3), das mindestens eine Vorrichtung (30, 35, 36, 37) enthält, wobei die Konfigurationsvorrichtung enthält:
- ein Berechtigungsmodul (110), das eingerichtet ist, um eine Berechtigung für einen Benutzer, auf ein System, besuchtes System genannt, zuzugreifen, zu erlangen;
- ein Erlangungsmodul (112) einer Nennkonfiguration, das eingerichtet ist, um für einen autorisierten Benutzer Informationsdaten zu erlangen, die für die Nennkonfiguration in einem Bezugssystem repräsentativ sind, wobei die Nennkonfiguration eine Information bezüglich eines im Bezugssystem konfigurierten Diensts und mindestens eine Konfigurationsregel einer Vorrichtung enthält, die zur Lieferung des Diensts im Bezugssystem beiträgt;
- ein Konfigurationsmodul (116), das eingerichtet ist, um das im Bezugssystem konfigurierte Dienst und mindestens einer Vorrichtung des besuchten Systems, die zur Lieferung des Diensts im besuchten System beiträgt, im besuchten System und abhängig von der erlangten Nennkonfiguration, zu konfigurieren.

7. Programm für eine Konfigurationsvorrichtung, das Programmcodeanweisungen enthält, die dazu bestimmt sind, die Ausführung der Aktionen des Konfigurationsverfahrens nach einem der Ansprüche 1 bis 5, die von der Vorrichtung durchgeführt werden, zu steuern, wenn das Programm von der Vorrichtung ausgeführt wird.

8. Speicherträger, der von einer Konfigurationsvorrichtung lesbar ist, auf dem das Programm nach Anspruch 7 gespeichert ist.

## Claims

1. Method for configuring a system (3) comprising at least one device (30, 35, 36, 37), said method comprising:
- an authorization for a user to access (E1) said system, called visited system;
- an obtaining (E6), for said user, of information data representative of a nominal configuration in a reference system (2), said nominal configuration comprising information relating to a service configured in said reference system and at least one configuration rule of a device contributing to the provision of said service in said reference system;
- a configuration (E8), in the visited system as a function of the nominal configuration obtained, of the service configured in said reference system and of at least one device of the visited system contributing to the provision of the service in the visited system.

2. Configuration method according to Claim 1, further comprising an obtaining (E5) of an inventory of the visited system, said inventory comprising, for a service offered in the visited system, a model of configuration of the service and, for a device contributing to the provision of a service, a model of configuration of the device.

3. Configuration method according to Claim 2, further comprising an obtaining (E4) of an inventory of the visited system for a given service, said inventory comprising, for said service, a model of configuration of the service and, for a device contributing to the provision of the service, a model of configuration of the device.

4. Configuration method according to Claim 1, comprising an obtaining of a configuration to be applied for a service offered in the visited system and absent from the nominal configuration obtained.

5. Configuration method according to Claim 1, wherein the configuration of the service in the visited system and of said at least one device of the visited system is determined also as a function of a security rule defined in the visited system.

6. Device (100, 50) for configuring a system (3) comprising at least one device (30, 35, 36, 37), said configuration device comprising:
- an authorization module (110), arranged to obtain an authorization for a user to access a system, called visited system;
- a module (112) for obtaining a nominal configuration, arranged to obtain, for an authorized user, information data representative of the nominal configuration in a reference system, said nominal configuration comprising information relating to a service configured in said reference system and to at least one configuration rule of a device contributing to the provision of said service in said reference system;
- a configuration module (116), arranged to configure in the visited system, as a function of the nominal configuration obtained, the service configured in said reference system and at least one device of the visited system contributing to the provision of the service in the visited system.

7. Program for a configuration device, comprising program code instructions intended to control the execution of the actions of the configuration method according to one of Claims 1 to 5 implemented by the device, when said program is run by said device.

8. Storage medium that can be read by a configuration device on which is stored the program according to Claim 7.
